Europäisches Patentamt

European Patent Office

Office européen des brevets

(19)

(11) Veröffentlichungsnummer: **0 126 386**
**B1**

(12) # EUROPÄISCHE PATENTSCHRIFT

(45) Veröffentlichungstag der Patentschrift:
12.08.87

(51) Int. Cl.⁴: **B 64 F 1/22**

(21) Anmeldenummer: **84105276.4**

(22) Anmeldetag: **10.05.84**

(54) **Schleppfahrzeug für Flugzeuge.**

(30) Priorität: **18.05.83 DE 3318077**

(43) Veröffentlichungstag der Anmeldung:
**28.11.84 Patentblatt 84/48**

(45) Bekanntmachung des Hinweises auf die Patenterteilung:
**12.08.87 Patentblatt 87/33**

(84) Benannte Vertragsstaaten:
**AT BE CH FR GB IT LI NL SE**

(56) Entgegenhaltungen:
**CH-A-551 312**
**FR-A-2 386 450**
**FR-A-2 452 427**
**FR-A-2 454 409**

(73) Patentinhaber: **Krauss- Maffei Aktiengesellschaft,**
**Krauss- Maffei- Strasse 2, D-8000 München 50 (DE)**

(72) Erfinder: **Schuller, Reinhard, Dr. Ing.,**
**Finsterwalderstrasse 38, D-8000 München 50 (DE)**
Erfinder: **Koch, Gerhard, Dipl.- Ing.,**
**Lohengrinstrasse 37, D-8034 Neugermering (DE)**

**Beschreibung**

Die Erfindung bezieht sich auf ein Schleppfahrzeug für Flugzeuge gemäß Oberbegriff des Anspruchs 1.

Ein Schleppfahrzeug dieser Art ist aus der FR-A-24 54 409 bekannt, bei dem in der gabelförmigen Ausnehmung zwischen den Rädern der Hinterachse eine hintere und zwei vordere Hubschaufeln angeordnet sind, von denen die vorderen Hubschaufeln, nachdem das Schleppfahrzeug so an das Flugzeugbugrad heranmanövriert worden ist, daß sich das Flugzeugbugrad innerhalb der gabelförmigen Ausnehmung befindet, nach innen, das Flugzeugbugrad hintergreifend geschwenkt werden und in die U-förmige Ausnehmung bewegt werden, bis das Bugrad auf der hinteren Hubschaufel zu liegen kommt. Dabei ist das Heranmanövrieren des Schleppfahrzeugs an das Bugrad, insbesondere bei für große Flugzeuge bestimmten Schleppfahrzeugen schwierig, da der für hohe Leistung ausgelegte Fahrzeugmotor nicht oder nur sehr unzulänglich mit der für ein sicheres Manövrieren im Feinbereich erforderlichen Genauigkeit geregelt werden kann.

Der Erfindung liegt daher die Aufgabe zugrunde, bei einem Schleppfahrzeug der genannten Art den Aufnahmevorgang dahingehend zu verbessern, daß das Flugzeugbugrad feinsteuerbar erfaßbar und mit großer Manövriersicherheit in die gabelförmige Ausnehmung einbringbar ist.

Diese Aufgabe wird durch die Merkmale aus dem Kennzeichen des Anspruchs 1 gelöst. Dabei ergibt sich der Vorteil, daß das Schleppfahrzeug nur bis zu einer Anfangsstellung zu manövrieren ist, bei der sich das Flugzeug-Bugrad in kurzer Entfernung vor der gabelförmigen Ausnehmung befindet. Der Aufnahmevorgang kann bei leerlaufendem Fahrzeugmotor erfolgen, da das Schleppfahrzeug nur mit der feinsteuerbaren Einzugsvorrichtung an das unbewegte Bugrad herangezogen wird. Die erforderliche Zugkraft für die Einzugsvorrichtung liegt dabei weit unter der Losbrechkraft, welche das Flugzeug zum Rollen bringen würde. Der Aufnahmevorgang kann somit auch am ungebremsten Flugzeugfahrwerk erfolgen.

In einer bevorzugten Ausführungsform besteht die Greifvorrichtung aus einem U-förmigen Rahmen, der mit gleicher Öffnungsrichtung in der gabelförmigen Ausnehmung angeordnet ist und dessen beide U-Schenkel teleskopisch mittels hydraulischer oder mechanischer Antriebseinrichtungen verlängerbar sind und in einem, mindestens der Bugradbreite entsprechenden Parallelabstand zueinander angeordnet sind, wobei an den Enden der U-Schenkel Greifarme schwenkbar gelagert sind, die während der Ausfahrbewegung senkrecht angeordnet sind, und in einer Position, in der das Bugrad von den ausgefahrenen U-Schenkeln mittig eingeschlossen ist, das Bugrad hintergreifend waagerecht schwenkbar sind, und daß die Hubvorrichtung aus hydraulischen, am Fahrgestell und am U-förmigen Rahmen angelenkten Hubzylindern besteht. Die Greifvorrichtung und die Hubvorrichtung bestehen somit aus einheitlichen Baugruppen, die, beispielsweise zur Wartung, unabhängig voneinander ausgebaut bzw. ausgetauscht werden können. Mittels der Aufhängung des U-förmigen Rahmens an verstellbaren Hubzylindern und geeigneter Meßeinrichtungen kann sichergestellt werden, daß auch bei extremen Schräglagen des Schleppfahrzeugs, wie sie z. B. bei Reifenschaden auftreten können, das Flugzeug-Bugrad immer in exakter Horizontallage gehalten werden kann.

Zweckmäßigerweise hat der Greifarm des einen U-Schenkels einen Verriegelungsbolzen angeordnet, der in waagrechter Stellung in eine Verriegelungsöffnung des anderen Greifarms einführbar ist. Es wird dadurch ein stabilerer Zusammenhalt der Greifvorrichtung beim Heranziehen des Schleppfahrzeugs an das Bugrad erreicht. Aufgrund dieser höheren Stabilität kann auch der Abstand zwischen den beiden U-Schenkeln weiter gehalten werden, so daß die Ausgangsposition in die das Schleppfahrzeug für den anschließenden Ankopplungsvorgang zu manövrieren ist, in weiteren Grenzen gehalten werden kann.

Um eine sichere Auflage des in die gabelförmige Ausnehmung eingebrachten Flugzeug-Bugrades zu erhalten, ist es vorteilhaft, wenn parallel zu dem die beiden U-Schenkel verbindenden Verbindungssteg des U-förmigen Rahmens eine einem Bremskeil ähnliche vordere Hubschaufel angeordnet ist. Dabei ist es zweckmäßig die Greifarme in entsprechender Weise, d.h. mit einer hinteren Hubschaufel, auszustatten.

Eine weitere Verbesserung ergibt sich dadurch, daß die vordere und/oder die hintere Hubschaufel in Kippgelenken drehbar gelagert sind, so daß auch bei Bugrädern mit unterschiedlichen Durchmessern stets eine optimale Halterung gewährleistet bleibt.

Zweckmäßigerweise sind in der gabelförmigen Ausnehmung eine oder mehrere Halteklauen angeordnet, die auf die Oberseite des Bugrades gedrückt werden können, so daß dieses auch in vertikaler Richtung arretierbar ist.

Eine derartige Verankerung des im Schleppfahrzeug aufgenommenen Flugzeug-Bugrades gewährleistet, daß dieses bei den beim Schleppvorgang auftretenden Zug- und Schubkräften sowie den durch Fahrbahnunebenheiten und dergleichen hervorgerufenen Abhebkräften einen sicheren Halt besitzt.

Vorzugsweise sind zwei in Kippgelenken gelagerte und schaufelartig ausgebildete Halteklauen vorgesehen.

In einer bevorzugten Ausführungsform sind die Halteklauen in vertikaler Richtung verstellbar angeordnet, so daß das Flugzeug-Bugrad in unterschiedlicher Höhenstellung im Schleppfahrzeug verankert werden kann. Die Höhenverstellung ist in den Fällen von Vorteil, in denen das Flugzeug mit abgesenktem Seitenleitwerk manövriert werden muß, beispielsweise wenn der Torrahmen einer Flugzeughalle zu niedrig ist.

Zu diesem Zweck können die Halteklauen auch am U-förmigen Rahmen angeordnet sein, so daß sich eine gesonderte Vorrichtung zur Vertikalverstellung der Halteklauen erübrigt und die Höhenposition des Bugrades allein durch die Hubvorrichtung bewirkt wird.

In einer anderen Ausführungsform mit nur einer Halteklaue, d.h. ohne Höhenverstellung kann diese entsprechend der vorderen Hubschaufel fest am U-förmigen Rahmen angeordnet sein, so daß das Flugzeug-Bugrad nach Beendigung des Einzugvorgangs in drei Punkten fest umklammert ist.

Der an den hydraulischen Hubzylindern angelenkte U-förmige Rahmen kann in der abgesenkten und in der angehobenen Position mit dem Fahrgestell mittels selbstzentrierender Verriegelungseinheiten gekoppelt werden, so daß in den Betriebszuständen, in denen über den Rahmen hohe Zug- oder Schubkräfte übertragen werden, eine sichere Arretierung der Greifvorrichtung in der gabelförmigen Ausnehmung gewährleistet ist.

Vorzugsweise bestehen die Verriegelungseinheiten aus am U-förmigen Rahmen befestigten Bolzen mit kegelstumpfförmig ausgebildeten Enden, denen im Fahrgestell Einrastöffnungen mit die Bolzen selbstzentrierenden kegelstumpfförmigen Fangöffnungen zugeordnet sind. Damit lassen sich Positionierungsungenauigkeiten des Schleppfahrzeugs in Bezug auf das Bugrad beim Hochheben desselben bis zu einen bestimmten Grad korrigieren.

In einer bevorzugten Ausführungsform bilden die Räder der Hinterachse jeweils ein auf einer Tandemachse gelagertes Tandemfahrwerk, das über eine Doppelwaage an einer am Fahrgestell angeordneten Zentralachse abgestützt ist. Bei hoher Lastaufnahmefähigkeit kann damit die Breite des Schleppfahrzeugs gering gehalten werden.

Um im beladenen Zustand eine hohe Belastbarkeit zu erreichen und im unbeladenen Zustand eine gute Manövrierfähigkeit zu erhalten, kann an einem verlängerten Ende der Doppelwaage ein am Fahrgestell abgestützter hydraulischer Hubzylinder angeordnet sein, mit dem jeweils eines der Räder aus dem Tandemfahrwerk hochstellbar ist.

Um Schwingungen der Doppelwaage zu vermeiden, kann diese am Ende mittels eines Schwingungsdämpfers gedämpft werden, was auch zu einem ruhigerem Schleppen führt.

Zur Verbesserung der Manövrierfähigkeit kann das Schleppfahrzeug mit einem Knicklenker-Fahrwerk oder mit einem Allradlenker-Fahrwerk ausgerüstet sein.

In einer bevorzugten Ausführungsform ist die Vorderachse in einem Drehgestell gelagert, mit dem das Schleppfahrzeug mit der gabelförmigen Ausnehmung präzise in die Ausgangsstellung vor dem Flugzeug-Bugrad manövrierbar ist.

Ein Ausführungsbeispiel der Erfindung wird nachfolgend anhand der Zeichnung näher beschrieben.

Es zeigen:

Fig. 1 ein Schleppfahrzeug in schematischer Darstellung in Ausgangsposition vor dem Bugrad eines teilweise dargestellten Flugzeugs,

Fig. 2 die Draufsicht auf das Fahrzeug nach Fig. 1,

Fig. 3A, 3B die Schnittansicht des Schleppfahrzeugs gemäß der Schnittlinie III-III in Fig. 2 mit unterschiedlichen Bugradpositionen und

Fig. 4A, 4B die Rückansicht auf das Schleppfahrzeug mit aufgenommenem Flugzeug-Bugrad in verschiedenen Stellungen.

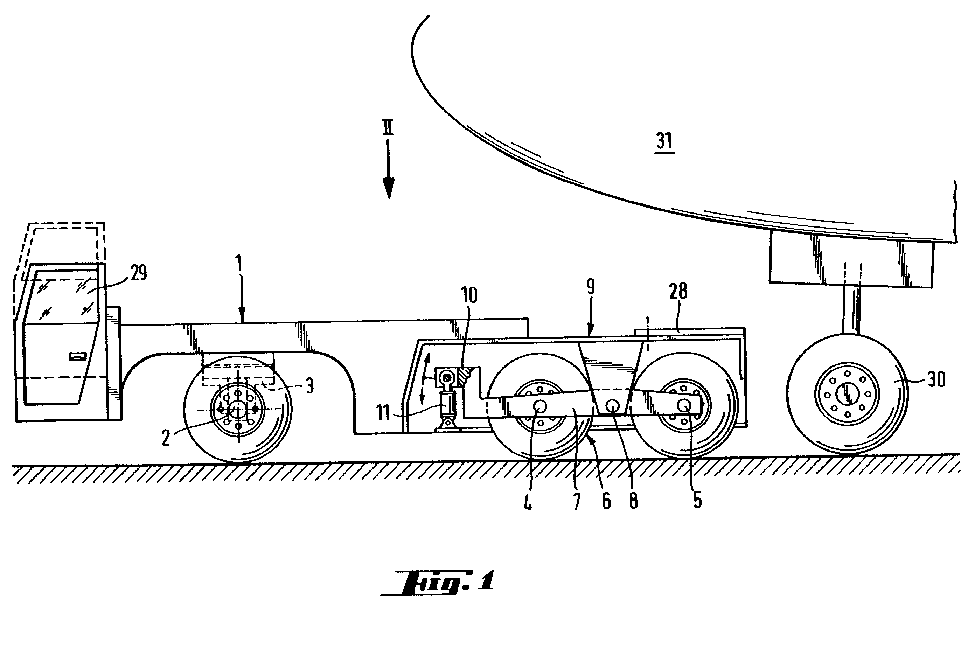

Das Schleppfahrzeug 1 weist ein Fahrwerk auf, dessen Vorderachse 2 gemäß Fig. 1 in einem Drehgestell 3 gelagert ist und dessen Hinterachse von den Tandemachsen 4 und 5 je eines, zu beiden Seiten des Schleppfahrzeugs angeordneten Tandemfahrwerks 6, 6' gebildet wird. Die Tandemachsen 4 und 5 sind in einer Doppelwaage 7 gelagert, die über eine Zentralachse 8 am Fahrgestell 9 abgestützt ist. Die Doppelwaage 7 weist an einem Ende eine Verlängerung 10 auf, die vom Hubkolben einer am Fahrgestell befestigten hydraulischen Hebevorrichtung 11 hochstellbar ist.

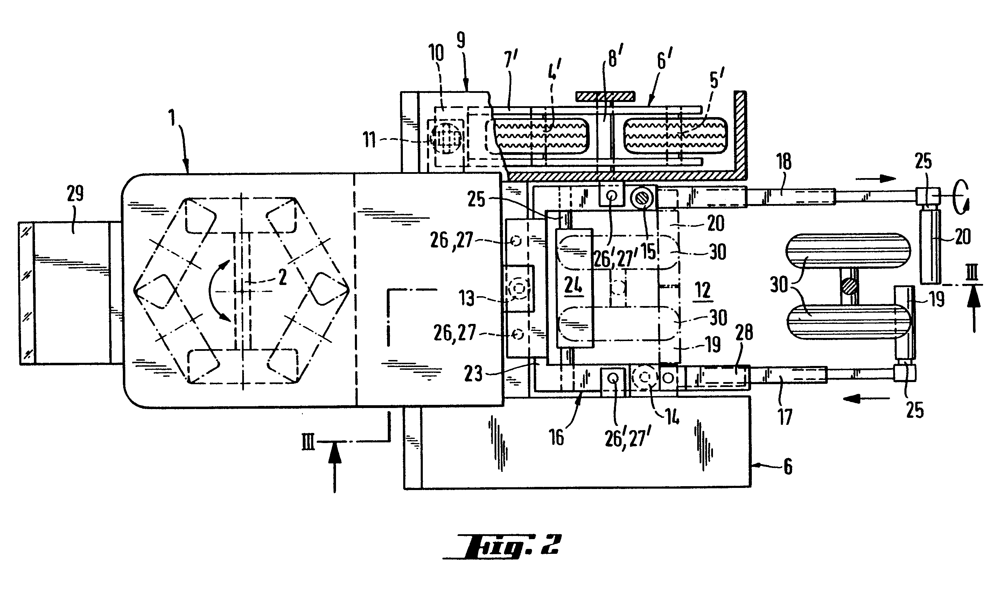

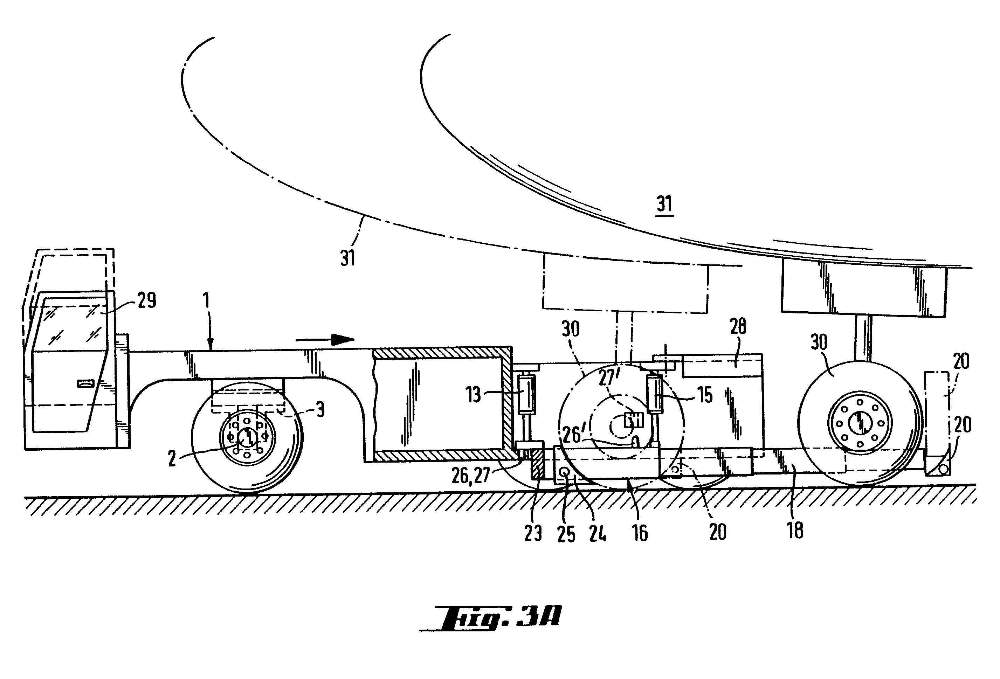

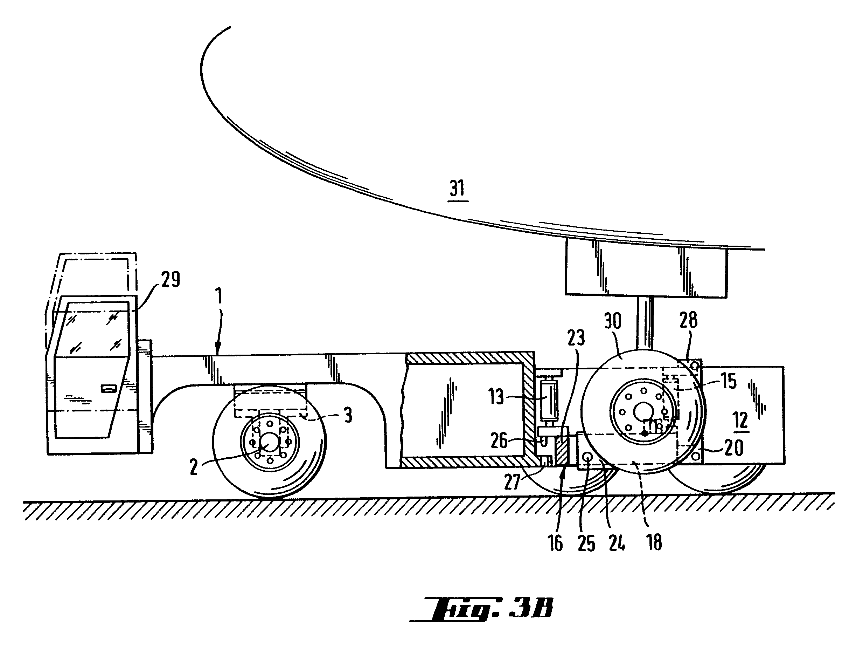

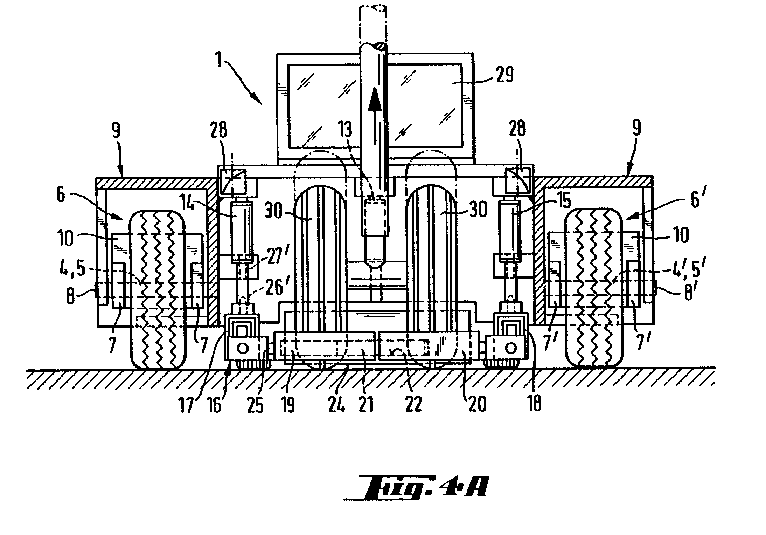

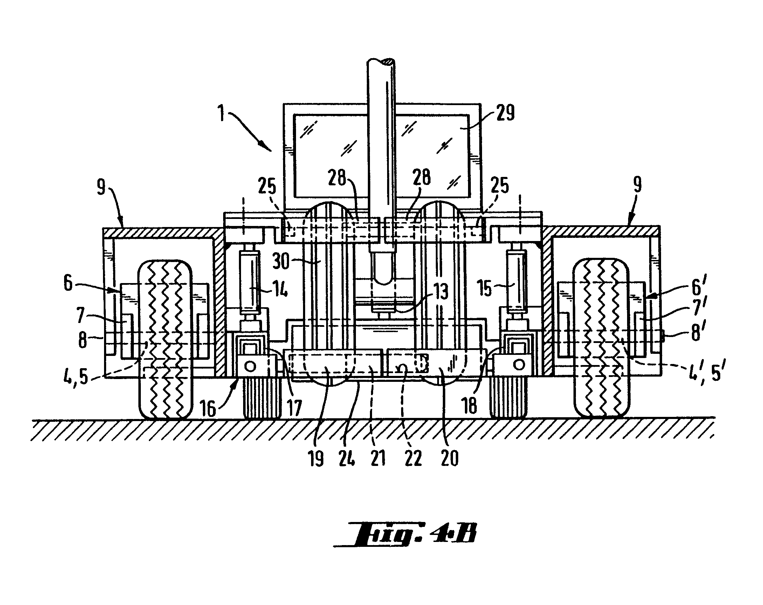

Zwischen den zu beiden Seiten des Fahrgestells 9 angeordneten Tandemfahrwerken 6, 6' hat das Schleppfahrzeug 1 eine gabelförmige Ausnehmung 12 (Fig. 2) ausgebildet, in der an hydraulischen Hubzylindern 13, 14 und 15 (Fig. 3 und 4) ein U-förmiger Rahmen 16 aufgehängt ist. Der U-förmige Rahmen 16 weist zwei parallele U-Schenkel 17 und 18 auf, die teleskopisch über das Schleppfahrzeug 1 hinaus verlängerbar sind. An den Enden der U-Schenkel 17 und 18 sind Greifarme 19 und 20 angelenkt, die waagrecht zueinander schwenkbar sind. Der Greifarm 19 trägt einen Verriegelungsbolzen 21, der in waagrechter Stellung der beiden Greifarme in die im gegenüberliegenden Greifarm 20 ausgebildete Verriegelungsöffnung 22 einführbar ist (Fig. 4A).

Der U-förmige Rahmen 16 hat parallel zu dem die beiden U-Schenkel 17 und 18 verbindenden Verbindungssteg 23 eine vordere Hubschaufel 24 angeordnet, die in einem Kippgelenk 25 gelagert ist. Die Greifarme 19 und 20 sind in entsprechender Weise in Form von in Kippgelenken gelagerten Hubschaufeln ausgebildet.

Der U-förmige Rahmen 16 ist in der abgesenkten Position, wie sie in den Fig. 3A und 4A dargestellt ist, mit dem Fahrgestell 9 über eine Verriegelungseinheit gekoppelt, die aus am U-förmigen Rahmen besfestigten Bolzen 26 bestehen, die in im Fahregestell 9 befindlichen Einrastöffnungen 27 stecken.

In entsprechender Weise ist der U-förmige Rahmen 16 in der angehobenen Position mit dem Fahrgestell 9 koppelbar, in der auf der Oberseite des U-förmigen Rahmens befestige Bolzen 26' (Fig. 3B) in im Fahrgestell zugeordnete Einrastöffnung 27' einsteckbar sind.

Am Fahrgestell 9 sind ausschwenkbar gelagerte Halteklauen 28 angeordnet.

Der Führerstand 29 des Schleppfahrzeugs 1 ist in der Höhe verstellbar vor der Vorderachse 2 angeordnet.

Das in Fig. 1 dargestellte Schleppfahrzeug 1 befindet sich in der Ausgangsstellung vor dem Bugrad 30 eines teilweise dargestellten Flugzeugs 31.

Für den Ankoppelvorgang wird das Schleppfahrzeug 1 vom Fahrer in die Ausgangsstellung (Fig. 1) gebracht, in der das Schleppfahrzeug 1 mit einer gabelförmigen Ausnehmung 12 in kurzem Abstand vor dem Bugrad 30 abgestellt wird. Anschließend werden die beiden Greifarme 19 und 20 mit den teleskopisch verlängerbaren U-Schenkeln 17 und 18 ausgefahren und hinter dem Flugzeug-Bugrad waagrecht zueinander geschwenkt (Fig. 2, Darstellung mit vollen Linien) und miteinander verriegelt.

Der U-förmige Rahmen 16, aus dem die beiden U-Schenkel 17 und 18 ausgefahren werden, befindet sich dabei in der unteren Position, in der er mittels der in den Einrastöffnungen 27 ruhenden Bolzen 26 mit dem Fahrgestell 9 gekoppelt ist.

Nach dem Verriegelungsvorgang der Greifarme werden die U-Schenkel 17 und 18 teleskopisch verkürzt, so daß zunächst die beiden Greifarme 19 und 20 auf der Rückseite des Flugzeug-Bugrades zur Anlage kommen und bei weiterem Einziehen der beiden U-Schenkel 17 und 18 das ungebremst abgestellte Schleppfahrzeug 1 herangezogen wird, bis sich das Flugzeug-Bugrad innerhalb der gabelförmigen Ausnehmung befindet und auf der vorderen Hubschaufel 24 zur Auflage kommt (Fig. 2 Darstellung in Strich-punktlinien).

Der das Flugzeug-Bugrad umschließende U-förmige Rahmen 16 wird anschließend mittels der Hubzylinder 13, 14 und 15 angehoben, bis er sich in der oberen Position (Fig. 3B) befindet, in der er mittels der in den Einrastöffnungen 27' ruhenden Bolzen 26' mit dem Fahrgestell 9 gekoppelt ist.

In der oberen Position werden vom Fahrgestell 9 Halteklauen 28 ausgeschwenkt durch die das Flugzeug-Bugrad 30 von oben gehalten wird, so daß es in jeder Richtung fest mit dem Schleppfahrzeug 1 verankert ist.

Das Manövrieren des unbeladenen Schleppfahrzeugs 1 in der für den Ankoppelvorgang geeignete Ausgangsstellung erfolgt zweckmäßigerweise mit angehobenem Tandemfahrwerk bei dem jeweils nur noch ein Rad unter Belastung steht. In dieser Betriebsstellung ist das Schleppfahrzeug leicht und präzise lenkbar.

Das mit dem angehobenen Bugrad 30 beladene Schleppfahrzeug 1 wird mit abgesenktem Tandemfahrwerk 6 (Fig. 1) bewegt, mit dem eine hohe Traglast aufgenommen werden kann.

## Patentansprüche

1. Schleppfahrzeug zum Manövrieren von Flugzeugen (31), dessen Fahrgestell zwischen den Rädern einer Radachse eine gabelförmige Ausnehmung (12) aufweist, in der eine mit einer Hubvorrichtung (13-15) zusammenwirkende Greifvorrichtung (16-20) angeordnet ist, mittels denen das Bugrad (30) des Flugzeugs erfaßbar und anhebbar ist, dadurch gekennzeichnet, daß die Greifvorrichtung aus der gabelförmigen Ausnehmung (12) herausbewegbar und mit einer Rückzugvorrichtung versehen ist.

2. Schleppfahrzeug nach Anspruch 1, dadurch gekennzeichnet, daß die Greifvorrichtung aus einem U-förmigen Rahmen (16) besteht, der mit gleicher Öffnungsrichtung in der gabelförmigen Ausnehmung (12) angeordnet ist, und dessen beide U-Schenkel (17 und 18) teleskopisch verlängerbar sind und in einem, mindestens der Bugradbreite entsprechenden Parallelabstand zueinander angeordnet sind, wobei an den freien Enden der U-Schenkel (17 und 18) Greifarme (19 und 20) schwenkbar gelagert sind, die in einer Position, in der das Bugrad (30) von den ausgefahrenen U-Schenkeln (17 und 18) mittig eingeschlossen ist, das Bugrad (30) hintergreifend schwenkbar sind, und daß die Hubvorrichtung aus hydraulischen, am Fahrgestell (9) und am U-förmigen Rahmen (16) angelenkten Hubzylindern (13, 14 und 15) besteht.

3. Schleppfahrzeug nach Anspruch 2, dadurch gekennzeichnet, daß der Greifarm (19) einer der beiden U-Schenkel (17 und 18) einen Verriegelungsbolzen (21) aufweist, der in waagerechter Stellung beider Greifarme (19 und 20) in eine Verriegelungsöffnung (22) des anderen Greifarms (20) einsteckbar ist.

4. Schleppfahrzeug nach den Ansprüchen 2 und 3, dadurch gekennzeichnet, daß parallel zu dem die beiden U-Schenkel (17 und 18) verbindenden Verbindungssteg (23) des U-förmigen Rahmens (16) eine vordere Hubschaufel (24) für die Auflage des Bugrades (30) angeordnet ist.

5. Schleppfahrzeug nach den Ansprüchen 2 bis 4, dadurch gekennzeichnet, daß die Greifarme (19, 20) in Form von Hubschaufeln ausgebildet sind.

6. Schleppfahrzeug nach den Ansprüchen 2 bis 3, dadurch gekennzeichnet, daß in der gabelförmigen Ausnehmung (12) eine oder mehrere, vorzugsweise zwei Halteklauen (28) angeordnet sind, mit denen das Bugrad (30) in vertikaler Richtung arretierbar ist.

7. Schleppfahrzeug nach Anspruch 6, dadurch gekennzeichnet, daß die Halteklauen (28) höhenverstellbar angeordnet sind.

8. Schleppfahrzeug nach den Ansprüchen 6 und 7, dadurch gekennzeichnet, daß die Halteklauen (28) am U-förmigen Rahmen (16) befestigt sind.

9. Schleppfahrzeug nach den Ansprüchen 4 bis 8, dadurch gekennzeichnet, daß die vordere Hubschaufel (24), die hinteren Hubschaufeln der Greifarme (19, 20) und die Halteklauen (28) in Kippgelenken schwenkbar gelagert sind.

10. Vorrichtung nach den Ansprüchen 2 bis 9, dadurch gekennzeichnet, daß der U-förmige Rahmen (16) in der unteren Position und in der oberen Position mit dem Fahrgestell (9) mittels selbstzentrierender Verriegelungseinheiten koppelbar ist.

11. Schleppfahrzeug nach Anspruch 10, dadurch gekennzeichnet, daß die Verriegelungseinheiten aus am U-förmigen Rahmen (16) befestigten Bolzen (26, 26') mit kegelstumpfförmig ausgebildeten Enden bestehen, denen im Fahrgestell (9) Einrastöffnungen (27, 27') mit die Bolzen (26, 26') selbstzentrierenden kegelstumpfförmigen Fangöffnungen zugeordnet sind.

12. Schleppfahrzeug nach den Ansprüchen 10 und 11, dadurch gekennzeichnet, daß an den Bolzen (26, 26') Kraftmeßdosen angeordnet sind, mit denen die im U-förmigen Rahmen (16) gegenüber dem Fahrgestell (9) auftretenden Quer- und Verdrehkräfte meßbar sind.

13. Schleppfahrzeug nach Anspruch 12, dadurch gekennzeichnet, daß die Einzugskraft der Einzugsvorrichtung in Abhängigkeit von den Meßgrößen aus den Kraftmeßdosen steuerbar ist.

14. Schleppfahrzeug nach den Ansprüchen 12 und 13, dadurch gekennzeichnet, daß die Antriebs- und Bremsleistung des Schleppfahrzeugs und/oder die Bremsleistung des Flugzeugfahrwerks in Abhängigkeit von den Meßgrößen aus den Kraftmeßdosen steuerbar ist.

15. Schleppfahrzeug nach den Ansprüchen 1 bis 14, dadurch gekennzeichnet, daß im Bereich der Öffnung der gabelförmigen Ausnehmung, vorzugsweise an der Greifvorrichtung, Meßeinrichtungen zur Anzeige der Position des Schleppfahrzeugs (1) in Bezug auf das Bugrad (30) angeordnet sind.

16. Schleppfahrzeug nach den Ansprüchen 1 bis 15, dadurch gekennzeichnet, daß der Fahrerstand (29) des Schleppfahrzeugs um 180° drehbar angeordnet ist.

17. Schleppfahrzeug nach den Ansprüchen 7 bis 16, dadurch gekennzeichnet, daß der Fahrerstand (29) des Schleppfahrzeugs (1) in der Höhe einstellbar angeordnet ist.

18. Schleppfahrzeug nach den Ansprüchen 1 bis 17, dadurch gekennzeichnet, daß die Räder der Hinterachse jeweils auf Tandemachsen (4, 4') und (5, 5') eines Tandemfahrwerks (6, 6') gelagert sind, das über eine Doppelwaage (7, 7') an einer am Fahrgestell (9) angeordneten Zentralachse (8, 8') abgestützt ist.

19. Schleppfahrzeug nach Anspruch 18, dadurch gekennzeichnet, daß an einem verlängerten Ende (10) der Doppelwaage (7, 7') ein am Fahrgestell (9) abgestützter hydraulischer Hubzylinder (11) angeordnet ist, mit dem jeweils eines der Räder aus dem Tandemfahrzeug (6, 6') hochstellbar ist.

20. Schleppfahrzeug nach den Ansprüchen 1 bis 19, dadurch gekennzeichnet, daß es ein Knicklenker-Fahrwerk mit starren Achsen aufweist.

21. Schleppfahrzeug nach den Ansprühen 1 bis 19, dadurch gekennzeichnet, daß es ein Allradlenker-Fahrwerk aufweist.

22. Schleppfahrzeug nach den Ansprühen 1 bis 19, dadurch gekennzeichnet, daß dessen Vorderachse (2) in einem Drehgestell (3) gelagert ist.

**Claims**

1. A tractor for towing aircrafts (31) having in its undercarriage between the wheels of a wheel axle a forked clearance (12), in which clearance is positioned a gripping appliance (16-20) interacting with a lift device (13-15), by means of which the front wheel (30) of the aircraft can be gripped and lifted, CHARACTERIZED IN THAT the gripping appliance is movable out of the forked clearance (12) and provided with a retractile mechanism.

2. A tractor in accordance with claim 1, CHARACTERIZED IN THAT the gripping appliance consists of a U-shaped frame (16) positioned in identical opening direction within the forked clearance (12), the two U-pieces (17 and 18) of which are telescopically extensible and spaced in parallel relationship with each other, the space corresponding to at least the width of the front wheel, and having at the free ends of the U-pieces (17 and 18) grips (19 and 20) for pivoting, which are pivoted on engaging to the front wheel (39), when said front wheel (30) is centrally surrounded by the extended U-pieces (17 and 18), and in that the lift device consists of hydraulic cylinders (13, 14, and 15) articulated to the undercarriage (9) and the U-shaped frame (16).

3. A tractor in accordance with claim 2, CHARACTERIZED IN THAT the grip (19) of one of the two U-pieces (17 and 18) has a stop bolt (21) to be plugged into a stop aperture (22) of the other grip (20) when both grips are in horizontal position.

4. A tractor in accordance with claims 2 and 3, CHARACTERIZED IN THAT a front lift blade (24) for support of the front wheel (30) is positioned in parallel to the trunk (23) connecting the two U-pieces (17 and 18) of the U-shaped frame (16).

5. A tractor in accordance with claims 2 thru 4, CHARACTERIZED IN THAT the grips (19, 20) have the form of lift blades.

6. A tractor in accordance with claims 2 thru 5, CHARACTERIZED IN THAT within the forked clearance (12) there are positioned one or more, preferably two, locking jaws (28), which can arrest the front wheel (30) in vertical direction.

7. A tractor in accordance with claim 6, CHARACTERIZED IN THAT the locking jaws (28) are positioned for vertical adjustment.

8. A tractor in accordance with claims 6 and 7, CHARACTERIZED IN THAT the locking jaws (28) are fastened to the U-shaped frame (16).

9. A tractor in accordance with claims 4 thru 8, CHARACTERIZED IN THAT the front lift blade (24), the rear lift blades of the grips (19, 20), and the locking jaws (28) are pivoted in tilting hinges.

10. A device in accordance with claims 2 thru 9 CHARACTERIZED IN THAT the U-shaped frame (16), in lower and in upper position, can be coupled to the undercarriage (9) by means of autocentering interlocking units.

11. A tractor in accordance with claim 10, CHARACTERIZED IN THAT the interlocking units consist of bolts (26, 26') fixed to the U-shaped frame (16) having truncated cone ends, to which bolts are assigned within the undercarriage (9) lock apertures (27, 27') having truncated cone-shaped grip apertures autocentering the bolts (26, 26').

12. A tractor in accordance with claims 10 and 11, CHARACTERIZED IN THAT dynamometer boxes are fixed to the bolts (26, 26') to measure the transverse and torsional forces occuring in the U-shaped frame (16) with respect to the undercarriage (9).

13. A tractor in accordance with claim 12, CHARACTERIZED IN THAT the retractile force of the retraction mechanism is controllable such as to be a function of the measuring magnitudes obtained from the dynamometer boxes.

14. A tractor in accordance with claims 12 and 13, CHARACTERIZED IN THAT the drive and brake power of the tractor and/or the brake power of the aircraft undercarriage are controllable such as to be a function of the measuring magnitudes obtained from the dynamometer boxes.

15. A tractor in accordance with claims 1 thru 14, CHARACTERIZED IN THAT within the area of the aperture of the forked clearance, preferably at the gripping appliance, there are measuring devices for indicating the position of the tractor (1) relative to the front wheel (30).

16. A tractor in accordance with claims 1 thru 15, CHARACTERIZED IN THAT the driver's compartment (29) of the tractor is pivotable through 180°.

17. A tractor in accordance with claims 1 thru 16, CHARACTERIZED IN THAT the driver's compartment (29) of the tractor is vertically adjustable.

18. A tractor in accordance with claims 1 thru 17,

CHARACTERIZED IN THAT the wheels of the rear axle each rest on tandem axles (4, 4') and (5, 5') of a tandem chassis (6, 6'), which is propped via a twin balance (7, 7') towards a central axle (8, 8') positioned at the undercarriage (9).

19. A tractor in accordance with claim 18, CHARACTERIZED IN THAT, at one of the elongated ends (10) of the twin balance (7, 7'), there is positioned a hydraulic cylinder (11) propped towards the undercarriage (9), allowing to lift one of the wheels of the tandem chassis (6, 6') at a time.

20. A tractor in accordance with claims 1 thru 19, CHARACTERIZED IN THAT it has a bent steering chassis having rigid axles.

21. A tractor in accordance with claims 1 thru 19, CHARACTERIZED IN THAT it has an all-wheel steering chassis.

22. A tractor in accordance with claims 1 thru 19, CHARACTERIZED IN THAT its front axle (2) rests within a pivot mounting (3).

## Revendications

1. Véhicule tracteur pour manoeuvrer des avions (31), dont le châssis présente, entre les roues d'un essieu, un évidement (12) en forme de fourche dans lequel se trouve un dispositif de préhension (16-20) coopérant avec un dispositif de levage (13-15), dispositifs au moyen desquels la roue avant (30) d'atterrissage de l'avion peut être saisie et soulevée, véhicule caractérisé par le fait que le dispositif de préhension peut être déployé de l'évidement (12) en forme de fourche, et est pourvu d'un dispositif de retrait.

2. Véhicule tracteur selon la revendication 1, caractérisé par le fait que le dispositif de préhension consiste en un cadre (16) configuré en U qui se trouve dans l'évidement (12) en forme de fourche en étant ouvert dans la même direction, et dont les deux branches (17 et 18) du U peuvent être prolongées télescopiquement et sont espacées parallèlement l'une de l'autre d'une distance correspondant au moins à la largeur de la roue avant d'atterrissage, les extrémités libres des branches (17 et 18) du U présentant des bras (19 et 20) de préhension qui sont montés à pivotement et qui, dans une position dans laquelle la roue avant (30) d'atterrissage est emprisonnée centralement par les branches déployées (17 et 18) du U, peuvent être animés d'un pivotement horizontal pour venir en prise par-derrière avec cette roue avant (30) d'atterrissage; et par le fait que le dispositif de levage consiste en des vérins hydrauliques (13, 14 et 15) de levage, articulés sur le châssis (9) et sur le cadre (16) configuré en U.

3. Véhicule tracteur selon la revendication 2, caractérisé par le fait que le bras (19) de préhension de l'une des deux branches (17 et 18) du U présente une cheville (21) de verrouillage pouvant être introduite, dans la position horizontale des deux bras (19 et 20) de préhension dans un orifice (22) de verrouillage pratiqué dans l'autre bras (20) de préhension.

4. Véhicule tracteur selon les revendications 2 et 3, caractérisé par le fait qu'une pale de levage antérieure (24), assurant l'assise de la roue avant (30) d'attertissage, est disposée parallèlement à la membrure de liaison (23) raccordant les deux branches (17 et 18) du cadre (16) configuré en U.

5. Véhicule tracteur selon les revendications 2 à 4, caractérisé par le fait que les bras (19 et 20) de préhension sont réalisés sous la forme de pales de levage.

6. Véhicule tracteur selon les revendications 2 à 5, caractérisé par le fait qu'une ou plusieurs, de préférence deux griffes de retenue (28) se trouvent dans l'évidement (12) en forme de fourche, griffes par lesquelles la roue avant (30) d'atterrissage peut être arrêtée dans le sens vertical.

7. Véhicule tracteur selon la revendication 6, caractérisé par le fait que les griffes (28) de retenue sont montées réglables en hauteur.

8. Véhicule tracteur selon les revendications 6 et 7, caractérisé par le fait que les griffes (28) de retenue sont fixées au cadre (16) configuré en U.

9. Véhicule tracteur selon les revendications 4 à 8, caractérisé par le fait que la pale le levage antérieure (24), les pales de levage postérieures des bras (19 et 20) de préhension et les griffes (28) de retenue sont montées à pivotement dans des articulations basculantes.

10. Dispositif selon les revendications 2 à 9, caractérisé par le fait que le cadre (16) configuré en U peut être accouplé au châssis (9), en position basse et en position haute, au moyen d'unités de verrouillage à effet d'auto-centrage.

11. Véhicule tracteur selon la revendication 10, caractérisé par le fait que les unités de verrouillage sont constituées par des tenons (26, 26') fixés au cadre (16) configuré en U et présentant des extrémités de réalisation tronconiques, tenons auxquels sont associés des orifices (27, 27') d'encliquetage pratiqués dans le châssis (9) et munis d'ouvertures réceptrices tronconiques qui centrent automatiquement lesdits tenons (26, 26').

12. Véhicule tracteur selon les revendications 10 et 11, caractérisé par le fait que des boîtes dynamométriques sont installées sur les tenons (26, 26'), ces boîtes permettant de mesurer les forces transversales et de torsion qui se manifestent dans le cadre (16) configuré en U par rapport au châssis (9).

13. Véhicule tracteur selon la revendication 12, caractérisé par le fait que la force d'engagement du dispositif d'engagement peut être commandée en fonction des grandeurs mesurées par les boîtes dynamométriques.

14. Véhicule tracteur selon les revendications 12 et 13, caractérisé par le fait que la puissance d'entraînement et de freinage de ce véhicule tracteur et/ou la puissance de freinage du châssis de l'avion peut être réglée en fonction des grandeurs mesurées par les boîtes dynamométriques.

15. Véhicule tracteur selon les revendications 1 à 14, caractérisé par le fait que des dispositifs mesureurs, destinés à afficher la position du véhicule tracteur (1) par rapport à la roue avant d'atterrissage (30), sont situés au voisinage de l'ouverture de l'évidement en forme de fourche, de préférence sur le dispositif de préhension.

16. Véhicule tracteur selon les revendications 1 à 15, caractérisé par le fait que la cabine de conduite (29) de ce véhicule tracteur peut accomplir une rotation de 180°.

17. Véhicule tracteur selon les revendications 1 à 16, caractérisé par le fait que la cabine de conduite (29) de ce véhicule tracteur (1) est réglable en hauteur.

18. Véhicule tracteur selon les revendications 1 à 17, caractérisé par le fait que les roues de l'essieu arrière sont respectivement montées sur les essieux tandem (4, 4' et 5, 5') d'un châssis tandem (6, 6') qui prend appui par l'intermédiaire d'une bielle double (7, 7'), sur un axe central (8, 8') disposé sur le châssis (9).

19. Véhicule tracteur selon la revendication 18, caractérisé par le fait qu'un vérin hydraulique de levage (11) prenant appui sur le châssis (9) est implanté sur une extrémité (10) prolongée de la bielle double (7, 7'), vérin par l'intermédiaire duquel l'une considérée des roues peut être soulevée hors du châssis tandem (6, 6').

20. Véhicule tracteur selon les revendications 1 à 19, caractérisé par le fait qu'il présente un châssis à direction articulée à essieux rigides.

21. Véhicule tracteur selon les revendications 1 à 19, caractérisé par le fait qu'il présente un châssis à commande de direction sur toutes les roues.

22. Véhicule tracteur selon les revendications 1 à 19, caractérisé par le fait que son essieu avant (2) est monté dans un châssis tournant (3).

**Fig. 1**

**Fig. 2**

*Fig. 3A*

0 126 386

Fig. 3B

Fig. 4A

0 126 386

Fig. 4·B